# EUROPEAN PATENT SPECIFICATION

(11) **EP 1 817 142 B1**
(45) Date of publication and mention of the grant of the patent: **19.05.2010**
(21) Application number: 05813497.4
(22) Date of filing: 30.11.2005
(51) Int. Cl.: B25J 19/00, B23Q 3/15, B25J 15/06, H01F 27/00, H02J 5/00

(54) **TRANSMISSION OF POWER SUPPLY FOR ROBOT APPLICATIONS BETWEEN A FIRST MEMBER AND A SECOND MEMBER ARRANGED ROTATABLE RELATIVE TO ONE ANOTHER**
ENERGIEVERSORGUNGSÜBERTRAGUNG FÜR ROBOTERANWENDUNGEN ZWISCHEN EINEM ERSTEN GLIED UND EINEM ZWEITEN GLIED, DIE DREHBAR BEZÜGLICH EINANDER ANGEORDNET SIND
TRANSMISSION DE L'ALIMENTATION ELECTRIQUE DANS DES APPLICATIONS ROBOTIQUES ENTRE UN PREMIER ELEMENT ET UN SECOND ELEMENT MONTES DE MANIERE ROTATIVE L'UN PAR RAPPORT A L'AUTRE

(30) Priority: 30.11.2004 SE 0402945
(43) Date of publication of application: 15.08.2007
(73) Proprietor: ABB Research Ltd, 8050 Zürich (CH)
(72) Inventor: KREITZ, Andreas, 69214 Eppelheim (DE); WALDI, Wolfgang, 69226 Nussloch (DE); HUG, Kuno, 69118 Heidelberg (DE); GENTZELL, Tobias, S-724 82 Västerås (SE); KJELLSSON, Jimmy, S-723 44 Västerås (SE); FREY, Jan-Erik, S-723 48 Västerås (SE)
(74) Representative: Kock, Ina
(86) International application number: PCT/SE2005/001813
(87) International publication number: WO 2006/059947

(56) References cited:
- EP-A- 0 525 459
- EP-A2- 0 844 627
- WO-A1-2004/112216
- WO-A1-2005/056249
- GB-A- 2 262 634
- US-A- 4 404 559
- US-A- 5 814 900
- KAWAMURA A ET AL: "WIRELESS TRANSMISSION OF POWER AND INFORMATION THROUGH ONE HIGH-FREQUENCY RESONANT AC LINK INVERTER FOR ROBOT MANIPULATOR APPLICATIONS" May 1996 (1996-05), IEEE TRANSACTIONS ON INDUSTRY APPLICATIONS, IEEE SERVICE CENTER, PISCATAWAY, NJ, US, PAGE(S) 503-508 , XP000598101 ISSN: 0093-9994 * the whole document *

## Description

The present invention concerns the transfer of process media in an industrial robot.

### BACKGROUND OF THE INVENTION

In an industrial robot there is a need for transfer of process media within the robot and to a tool carried by the robot. Process media most commonly comprises compressed air, cooling fluids, electric power electric signals and such. It is known to assemble all these process media in a process cabling. Thus, a process cabling comprises a plurality of electric wires and hoses. The wires and hoses may be bundled together and protected by a flexible tube. In a know arrangement the cabling is arranged on the outside of the articulated robot parts and arms for process media supply to the tool. Since the robot is capable of moving the tool in very complex patterns the cabling must be very flexible to be capable of following these movements. Due to the complex twisting and bending of the cabling the individual cable parts and hoses of the cabling are often worn out or begins to operate in failure. The appearances of a contact failure or media leakage is difficult to detect and also difficult to repair. Often the whole process cabling has to be replaced. Besides, the cabling arrangement on the outside of the robot trespasses the working space and sometimes blocking the performance of the robot.

A known solution is the arrangement of the process cabling inside the robot arms, especially the upper arm. By placing the cabling along the center or near the center of a longitudinal axis of an articulated robot part the cabling is exposed to less complicated bending and twisting. To accomplish such arrangements the articulated robot part, such at the upper arm of the robot, must be specially designed. All shafts and motors have to be positioned away of the center axis of the robot part. Still the cabling is worn and sometimes torn by this twisting and bending movements. The presence of contact failure in only one part of the process cabling may necessitate the whole cabling to be replaced. The replacement of the cabling, especially inside the robot arms, may put the robot out of production for a considerable period of time. This affects the production time. Thus there is still a need for an improved process media supply for the tool of an industrial robot.

From US 5,488,215 (Aronsson) a swivel connection for attachment between a robot and a tool carried by the robot is previously known. The swivel comprises a first part attached to the turning disc of a robot and a second part surrounding the first part. The first and second parts are arranged rotatable around a common axis. The first part is carrying the tool. The first part comprises a plurality of circular grooves for transferring a fluid media. The grooves are arranged in radial planes coaxially aligned with the common axis. The second part of the swivel is encircling the first part and comprises an equal number of media supply channels. The grooves are separated from each other by circular sealing rings, which are tightly arranged between the first and second part. Thus, the media is supplied to one of the supply channels in the second part, transferred into one of the circular grooves and further to a channel in the first part The known swivel connection also comprises an electric power connection. A first pair of electrically conducting rings is attached to the first part of the swivel and a second pair of rings is attached to the second part. Each pair of rings is arranged coaxial with the common axis and in adjacent radial planes. When swiveling the connection the two pairs of rings are just loosely in touch with each other. When supplying electric power the two pairs of rings are pressed against each other by means of compressed air. Thus electric power is supplied only when the swivel is not rotating.

From EP 1,099,520 (Hansson) a second swivel connection for attachment to a robot is previously known. The known swivel comprises a cylindrical distance member attached to the turning disc and an outer sleeve member for attachment to the robot. The distance member is intended for carrying the tool. The swivel comprises a portion for fluid media supply which is of the same kind as the known swivel connection above. The electric power supply part comprises a plurality of conductible slip rings attached to the distance member and an equal number of pins attached to the sleeve member. Each pin is in resilient sliding contact with an adjacent ring.

The arrangement of pins or brushes and slip rings involves a plurality of drawbacks. Any disturbance in the contact between the pin and the slip ring will cause a transient in the electric signal. The frequent sliding of the pin against the slip ring will wear the slip ring and finally cause a contact failure between the pin and the slip ring. There will always be infinitesimal moments of non contact, which will disturb the electric communication over the swivel connection. To minimize this disturbance it is known to arrange a plurality of contact shoes along each slip ring. This will ensure that at least one contact shoe is in firm contact with the slip ring at every moment. Each additional shoe causes however due to friction a raise in the torque needed for rotation. To transfer electric power the force of the contact shoe on the slip ring must be increased. The increased force leads to higher friction and to a further decrease of the performance of the robot. The slip rings and the contact shoes must be made of high quality material which is expensive. Still the slip ring connection demands a regular service.

Most swivel solutions comprises a load carrying shank part surrounded by a collar part and are placed between the robot and the tool. The two parts of the swivel is not detachable but in firm rotational contact with each other. Thus in a system with exchangeable tools there has to be a contact interface for connecting the tool. This interface both has a mechanical coupling, a media coupling and an electric coupling. Thus even if the swivel solves the problem of the cabling being worn by twisting there is still a contact problem in the swivel itself or in the connecting interface.

From US 5,814,900 (Esser et al) a device for combined transmission of energy and electric signals is previously known. The object of the device is to provide electrical energy and control data between two components that are moveable in an environment with presence of magnetic interference fields causing noise. The device contains a primary coil, a secondary coil and a core of ferromagnetic material. The device also comprises means for simultaneous transmission of control signals between components that are moveable relative to each other. The core comprises a first part and a second part separated by an air gap. The first part carries the primary winding and is attached to a first component. The second part carries the secondary winding and is attached to a second component. Attached to each component the device also contains a first and second antenna inside the core for exchanging control signals between the components. In order not to be affected by electromechanical noise the antennas is placed on the inside of the core. Thus the antennas are shielded by the core of the rotating transformer.

Document WO 2004/112216 is a prior art document according to Article 54(3) EPC and discloses a power supply system for an industrial robot comprising a transmitting and a receiving part.

For use in transferring power in an industrial robot this cored rotating electric power transfer unit is far too heavy. The large core parts are expensive to produce and the ferrite material is very brittle. The known device is therefore unsuitable for use in harsh environment. A small collision force on the robot would completely destroy the effectiveness of the known transformer. The known electric energy device offers no solution to the transfer of a fluid media.

On the one hand the known swivel connection avoids loose hanging wires and provides a high degree of rotation. On the other hand the known swivel connection is an expensive solution. The known connections also require a high degree of maintenance. Swivel connections are therefore primarily used for special applications. To some extent, swivel connections also have a bit of a bad reputation regarding quality.

The main reason for the high cost of a swivel connection according to the prior art is that it has to be able to carry the load that the robot can support. The cost of a swivel solution that needs to carry the load therefore is too high to be suitable as a standard solution for the power transfer.

### SUMMARY OF THE INVENTION

A primary object of the present invention is to provide a flexible process media supply between a first and second part of an industrial robot, which are rotatable relative to each other. Preferably the process media in the form of electric power comprises the region above 8 W. A secondary object of the invention is to provide an endlessly rotatable process media supply to a tool carried by the industrial robot. By the expression process media should be understood all kinds of media for operating a tool carried by an industrial robot. Thus, one such media comprises electric power. Another such media comprises a fluid, such as gas or a liquid compound.

This object is achieved according to the invention by a power supply system according to the features in the characterizing part of the independent claim 1 and by a method according to the features in the characterizing part of the independent claim 12. Preferred embodiments are described in the dependent claims.

According to the invention a process media transfer unit comprises a first electric circuit, a magnetic circuit and a second electric circuit. The magnetic circuit is arranged to interact with the first electric circuit and the second electric circuit to transferring electric power therebetween. The first electric circuit comprises a first coil for generating a magnetic flux to the magnetic circuit and the second electric circuit comprises a second coil for receiving the magnetic flux from the magnetic circuit. According to the invention the first and second coil are rotatable arranged relative to each other about a common axis. In one embodiment the first and second coil are arranged in parallel radial planes. In another embodiment the first and second coil comprise a first and second ring arranged coaxially with each other. Preferably the first and second coils comprise coreless coils.

In an embodiment of the invention the first electric circuit comprises a first electric converter for converting a first current into a second ac current for feeding the first coil. In another embodiment of the invention the second electric circuit comprises a second electric converter for converting a third ac current received from the second coil into a forth current. The first and fourth current may either be a dc current or an ac current. In a further embodiment of the invention each electric circuit comprises a plurality of coils for transferring a plurality of electric power supplies. In yet a further embodiment of the invention the first and second electric circuit comprises means for transferring an electric signal carrying information between the first and second circuit.

According to a development of the invention the process media transfer unit further comprises at least one passageway for transfer of fluid media such as gas or a liquid compound. Each passageway comprises a rotatable cavity in fluid communication with a first and second channel for supplying media trough the process media transfer unit. In an embodiment the process media transfer unit forms an endlessly rotatable joint. In this embodiment the process media transfer unit is thus capable of not only providing electric power but also providing fluid media such as compressed air and cooling water between a first and second robot part while being endlessly rotatable.

According to an embodiment of the invention the process media transfer unit comprises a first part for attachment to a first robot part and a second part for attachment to a second robot part and an airgap separating the first and second part. The first part and the second part are arranged rotatable around a common axis and the airgap forms a rotational body between the first and second part. The shape of the airgap may be cylindrical, conical, flat or any combination thereof. In a further embodiment of the invention the first and second part comprise a first and second ring, where the second ring comprises a central opening for receiving the second robot part. As an example the second robot part comprises the turning disc of an industrial robot. In this embodiment the process media transfer unit is attached to the flange of the turning disc and thus does not trespass on the mechanical coupling interface of the robot. In this embodiment the process media transfer unit does not have to carry any weight. The tool centerpoint is kept closer to the end of the robot.

According to a further embodiment of the invention the airgap of the process media transfer unit comprises at least one cavity. Preferably the cavity is circular and formed as a groove in either the first part, the second part or in both parts. Each cavity is sealed off by a pair of circular tightening resilient bands arranged in the airgap. Two adjacent cavities may have one circular tightening resilient band in common. In one embodiment the first part contains a first channel and second part contains a second channel, both channels being connected to the same cavity, thus providing a fluid media throughput.

The first electric power converter is in a further embodiment integrated with the first part. The second electric power converter is in a further embodiment integrated with the second part. In another embodiment the first and second converter comprise an electric circuit for forming a resonant circuit with each coil to strengthen the magnetic flux.

By integrating the electric power converters into the process media transfer unit the unit becomes a stand alone product. The product is fed by a dc or an ac current and fluid media in one end and a second dc or ac current and media are received at the other end while being endlessly rotatable. In a further embodiment of the invention the process media transfer unit comprises an electric power supply. Such electric power supply comprises battery means as well as capacitor means.

According to a first aspect of the invention the objects are achieved by a process media transfer unit for an industrial robot comprising a first part containing a first electric circuit, a second part containing a second electric circuit, and an airgap separating the first and second part, the airgap containing a magnetic circuit, whereby the first and second electric circuit interact with the magnetic circuit to transfer an electric power.

According to a further embodiment of the first aspect the airgap of the process media transfer unit comprises a cavity. In a further embodiment the cavity is in fluid communication with the outside of the first and second part, thus providing a fluid media throughput from the first to the second part. In a further embodiment the cavity houses the first and second coll. In one embodiment the cavity is formed as a groove in either the first part, the second part or in both parts. Each cavity is in an embodiment of the invention sealed off by a pair of circular tightening resilient bands arranged in the airgap.

According to a second aspect of the invention the objects are achieved by a method for transferring electric power between a first part attached to a first robot part and a second part attached to a second robot part and separated from the first part by an airgap, the method comprises:
supplying a second high frequency ac current to a first coil in the first part,
forming by the first coil a magnetic flux in the airgap,
receiving by a second coil in the second part the magnetic flux, transforming by the second coil the magnetic flux into a third high frequency ac current, and
supplying the current to the second robot part.

According to an embodiment of the second aspect of the invention the supplying of a second high frequency ac current to a first coil in the first part further comprises: supplying from the first robot part a first current to a first converter in the first part, and converting the first current into the second high frequency ac current.

According to an embodiment of the second aspect of the invention the supplying the current to the second robot part further comprises:
converting by a second electric converter in the second part the third high frequency ac current into a forth current, and
supplying the forth current to the second robot part

In a further embodiment of the second aspect the method further comprises providing a cavity in the airgap, providing in the first part a first channel in fluid communication with the cavity, providing in the second part a second channel in fluid communication with the cavity, and transferring a fluid media between the first robot part and the second robot part.

In preferred embodiments of the invention the first and second converter comprises a microprocessor unit or a computer. The unit comprises memory means for storing a computer program that is controlling the power transfer and the resonance of the magnetic circuit. Preferably such a computer program contains instructions for the processor to perform the method as described above. In one embodiment the computer program is provided on a computer readable carrier such as a CD rom. In another embodiment of the invention the program is provided at least in parts over a network such as the Internet. For receiving data or computer program code the computer unit has a communication link with a local area network. This link may comprise a wireless system, a direct contact system or as an overlay on the power supply.

### BRIEF DESCRIPTION OF THE DRAWINGS

Other features and advantages of the present invention will become more apparent to a person skilled in the art from the following detailed description in conjunction with the appended drawings in which:
FIG 1 is a simple sketch of a process media supply system of an industrial robot according to the invention,
FIG 2 is a process media supply unit according to the invention,
FIG 3 is a second embodiment of a process media supply unit according to the invention,
FIG 4 is a third embodiment of a process media supply unit according to the invention,
FIG 5 is a forth embodiment of a process media supply unit according to the invention, and
FIG 6 is a fifth embodiment of a process media supply unit according to the invention.

### DETAILED DESCRIPTION OF THE INVENTION

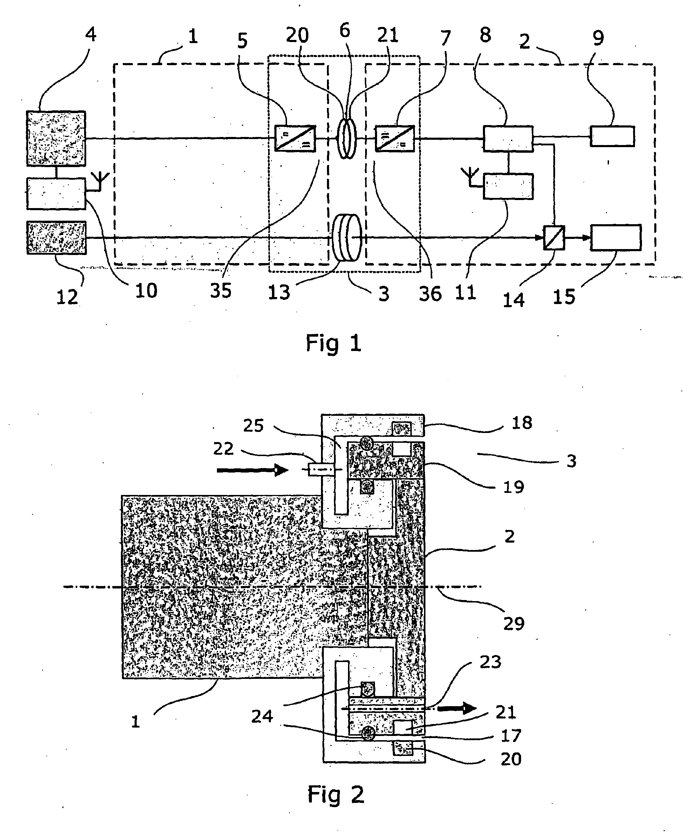

An industrial robot comprises a plurality of articulated parts for carrying and operating a tool. As schematically shown in fig 1 an industrial robot comprises at least a first robot part 1, which may be a first robot arm, and a second robot part 2, which may be a second robot arm. Between the first and second robot part there is a process media transfer unit 3. In the embodiment shown the second robot part comprises a tool carried by the robot. Electric power is supplied to the second robot part from a power supply unit 4, which supplies a dc current to a first electric converter 5. Normally the power supply unit is positioned in a control unit of the industrial robot. The first electric converter 5 converts the dc current into a high frequency ac current for supply to a first coil 20. The first coil generates a magnetic flux, which is received by a second coil 21. The second coil supplies a high frequency ac current to a second electric converter 8. The second electric converter converts the high frequency ac current into a dc current for supplying electric power to electric consumers of the second robot part.

In the embodiment shown in fig 1 the first coil 20 forms a first electric circuit 35 and the second coil 21 forms, a second electric circuit 36. The first and second electric circuit interacts with a magnetic circuit 6, which thus comprises the magnetic flux. The first electric circuit 35 comprises In one embodiment the first electric converter 20. The second electric circuit 36 comprises in another embodiment the second electric converter 21. In the embodiment shown the electric consumers comprise an I/O-unit 8, a sensor 9, a signal communication unit 11 and a fluid valve 14.

A supply of fluid media comprises a media supply unit. 12. In the embodiment shown the media comprises compressed air. The media supply is feeding media to a rotatable cavity 13. The process media transfer unit 3 comprises a first and second channel in fluid connection with the cavity to form an endless rotatable media throughput between the first and second robot part. Thus, through the rotatable cavity the fluid media is supplied to a valve 14 on the second robot part for controlled operation of an actuator 15 on the second robot part.

The communication of control signals is provided by a first wireless communication unit 10 and a second wireless communication unit 11. The first wireless communication unit is powered from the power source 4 directly. The second wireless communication unit is powered by the second dc current from the second electric converter. Thus, both the first and the second wireless communication unit comprise means for transmitting and receiving wireless signals. In a further embodiment the wireless communication units comprises computer means containing memory means for evaluating the signals and effecting the control.

A process media transfer unit 3 according to the invention is shown in fig 2. The unit comprises a first part 18 attached to the first robot part 1 and a second part attached to the second robot part 2. Between the first and second part is formed a thin airgap 17 allowing the parts an endless rotation relative to each other. The first part comprises a first coil 20 arranged in an open cavity forming a circular groove in the first part. The second part comprises a second coil 21 arranged in an open cavity forming a circular groove in the second part and facing the first coil across the airgap 17. The first and second coils are arranged to generate and receive a magnetic flux in the airgap for electric power transfer through the unit. Between the first and second media unit is arranged a cavity 25 for transfer of fluid media. In the embodiment shown the cavity comprises a groove in the first part. The cavity is in fluid communication with a first media channel 22 and a second media channel 23. Thus, a media stream may pass through the unit from the first media channel, through the cavity and out from the second media channel. In the embodiment shown the cavity is formed between the first and second parts and sealed off by resilient tightening bands 24. The cross section of the tightening bands is in the embodiment shown circular.

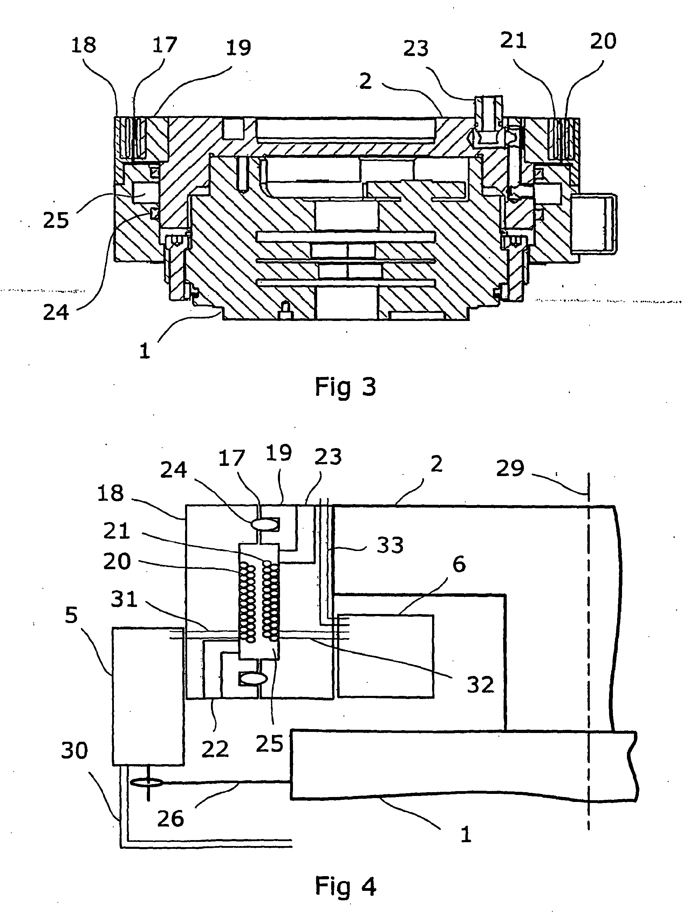

A second embodiment of the process media supply unit is shown in fig 3. A first part 18 comprising a first coil 20 in an open cavity is attached to the first robot part 1. A second part 19 comprising a second coil 21 in an open cavity is attached to the second robot part 2. The first and second part is separated by an airgap 17. The first and second coil is arranged to form a rotating electric power transfer unit for magnetic flux interaction across the airgap. In this embodiment the cavity 25 is formed as a circular groove in the first part 18. The groove is sealed off by a resilient tightening band 24 on each side of the groove. The cross section of the resilient tightening band has a square shape. Both of the resilient tightening bands are positioned on the same side of the second part. In order to protect the coils from receiving particles or dust from the environment the first or second part may comprise a lip to cover the airgap.

A third embodiment of the process media supply unit is shown in fig 4. A first part 18 comprising a first coil 20 of a rotating electric power transfer unit is attached to the first robot part 1. A second part 19 comprising a second coil 21 of the rotating electric power transfer unit is attached to the second robot part 2. In this embodiment the cavity 25 is formed as circular grooves in both the first part 18 and the second part 19. The grooves are sealed off by resilient tightening bands 24 on each side of the cavity. In the example the cross section of the tightening bands has an oval shape. A first media channel 22 in the first part 18 is in fluid communication with the cavity 25. A second media channel 23 in the second part 19 is also in fluid communication with the cavity 25. Thus the fluid media supply passes through the first channel, the cavity and the second channel.

In the embodiment shown in fig 4 the cavity 25 contains both the first coil 20 and the second coil 21 of the rotating transformer. The first part 18 comprises a first cavity part in which the first coil 20 is located. The second part 19 comprises a second cavity part in which the second coil 21 is located. The first and second coil is arranged to generate and receive a magnetic flux across the airgap 17. In the embodiment shown the cavity is in fluid communication with the first channel contains the rotating electric power transfer unit and thus both fluid media and electric power passes the cavity. However the two coils may be placed in a cavity not intended for fluid transfer. By this arrangement the colis are sealed off from the dusty environment in which the robot operates.

The first converter 5 is in the embodiment attached to the first part 18 and the second converter is attached to the second part 19. Thus both converters are integrated into the process media supply unit. A first current 30 is fed to the first converter 5. The first current is converted into a second high frequency ac current 31 for feeding the first coil 20. By generating a magnetic flux the power is transferred to the second coil. A third ac current 32 is received from the second coil and fed into the second converter. Finally a forth current 33 from the second converter is supplied to the second robot part. In a further development of this embodiment the second converter comprises battery means for providing a continuous power supply also in case of a malfunction of the rotating transformer.

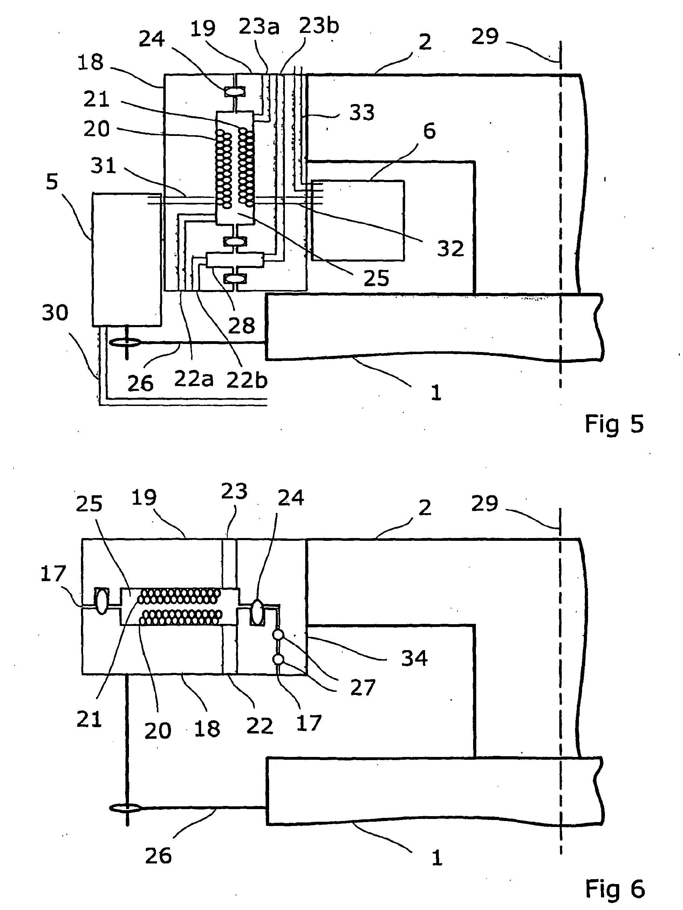

A variation of the embodiment from fig 4 is shown in fig 5. All parts are referred to by the same number as in fig 4. In the embodiment there are arranged two media throughputs. There is a first cavity 25 as in fig 4, containing the rotating electric power transfer unit and a transfer of a first fluid media. Then there is a second cavity 28 arranged for a second stream of fluid media. Thus there is a first 22a and second 23a channel in fluid communication with the first cavity 25. Then there is a third 22.b and a forth 23b channel in fluid communication with the second cavity 28. By this arrangement there are two supplies of fluid media. It is appreciated by a person skilled in the art to provide any number of cavities and channels for transferring a plurality of fluid media to the second robot part.

Still a further embodiment of the process media unit is disclosed in fig 6. In this embodiment the cavity 25 is arranged in a radial plane to the common axis 29. In the embodiment there is a first part 18 containing the first coil 20 and a second part 19 containing the second coil 21. There is a first 22 and second 23 media channels in fluid communication with the cavity 25. To hold the first part in a rotatable self-supporting manner there is arranged a circular bearing arrangement comprising ball bearing means 27. As in all of fig 4 to 6 the first part is attached to the first robot part by a dog arrangement 26. Also as shown in fig 6 the second part 19 comprises a central opening 34 for receiving the second robot part 2.

While the invention has been specifically described in connection with the accompanied figures of specific embodiment it should be understood that various alternative embodiments of the invention described may be employed in practicing the invention. It is intended that the following claims define the scope of the invention and that the system and method within the scope of these claims and their equivalents be covered thereby. Thus the invention may involve a plurality of coils as well as a plurality of cavities and channels. The invention may also involve a plurality of electric converter units. The media transfer nit may be produced of plastic materials as well as metallic materials or any combination of these materials.

Although the rotating electric power transfer unit has been described as a containing two coreless coils it lies within the scope of the invention to strengthen the magnetic flux by introducing a magnetizable material.

In the description each electric circuit comprises one coil and one converter. It is however within the knowledge of a person skilled in the art to arrange a plurality of coil as well as a plurality of electric converters in a joint electric power and signal transfer. Each converter may also receive a plurality of electric supply, of which one may be redundant. Further the power supply of the converters may be a dc current as well as an ac current. Preferably the power supply is a 24 volt dc supply but any voltage within the low voltage region may be provided.

## Claims

1. A process media transfer unit for an industrial robot comprising a first part (18) for attachment to a first robot part (1), a second part (19) for attachment to a second robot part (2), and an airgap (17), the first and second part being coaxially arranged about a common axis (29) and separated by the airgap (17) to provide an endless rotation relative to each other, wherein the first part (18) comprise a first channel (22, 22a) in fluid communication with a cavity (13, 25), and the second part (18) comprises a second channel (23, 23a) in fluid communication with the cavity, thereby forming a throushput between the parts, wherein the first part (18) comprises a first electric circuit (35) including a first aircored coil (20), wherein the second part (19) comprises a second electric circuit (36) including a second aircored coil (21), wherein the airgap is formed between the first aircored coil and the second aircored coil, and wherein the process media transfer unit comprises a magnetic circuit (6) for interaction with the first and second electric circuits across the airgap, whereby the first electric circuit is arranged to receive an electric current to generate a magnetic flux in the magnetic circuit and the second electric circuit is arranged to receive the magnetic flux of the magnetic circuit and supply an electric current to the second robot part.

2. A process media transfer unit according to claim 1, wherein the airgap (17) comprises a circular cylindrical shape.

3. A process media transfer unit according to claim 1 or 2, wherein the airgap (17) comprises a part arranged in a radial plane to the common axis (29).

4. A process media transfer unit according to any of the preceding claims, wherein the media transfer unit comprises a bearing arrangement (27) in the airgap for making the first part (18) self-supported.

5. A process media transfer unit according to any of the preceding claims, wherein the airgap (17) comprises the cavity (25) sealed off by resilient circular bands (24).

6. A process media transfer unit according to claim 5, wherein the cavity (25) contains the first coil (20) and the second coil (21).

7. A process media transfer unit according to any one of the preceding claims, wherein the first part (18) comprises an additional-third channel (22b) in fluid communication with a second cavity (28), and the second part (19) comprises an additional third channel (23b) fluid communication with the second cavity (28).

8. A process media transfer unit according to any of the preceding claims, wherein the first electric circuit (35) comprises a first electric converter (5) for receiving a first dc current (30) and supplying a second high frequency ac current (31) to the first coil (20).

9. A process media transfer unit according to any of the preceding claims, wherein the second electric circuit (36) comprises a second electric converter (7) for receiving a third high frequency ac current (32) from the second coil (21) and supplying a fourth dc current (33) to the second robot part

10. A process media transfer unit according to claim 9, wherein the second converter (7) comprises battery means for uninterrupted power supply.

11. A process media transfer unit according to any of the preceding claims, wherein the second part (19) comprises a central opening (34) for receiving the second robot part (2).

12. A method for transferring electric power between a first part (18) of a process media transfer unit attached to a first robot part (1) and a second part (19) of a process media transfer unit attached to a second robot part (2) and separated from the first part by an airgap (17), the method comprising: supplying from the first robot part a second high frequency ac current (31), supplying the second high frequency ac current to a first aircored coil (20) in the first part, forming by the first aircored coil a magnetic flux (6) in the airgap, receiving by a second aircored coil (21) in the second part the magnetic flux, transforming by the second aircored coil the magnetic flux into a third high frequency ac current (32) for electric power supply to the second robot part, and further comprising providing in the first part a first channel in fluid communication with the cavity providing in the second part a second channel in fluid communication with the cavity, and transferring a fluid media between the first robot part and the second robot part. through said channels and the cavity.

13. A method according to claim 12, wherein the supplying of the second high frequency ac current further comprises: supplying a first current (30) to a first converter (5) in the first part, and converting the first current into the second high frequency ac current (31).

14. A method according to claim 12 or 13, wherein the electric power supply to the second robot part comprises: converting by a second electric converter (7) in the second part the third high frequency ac current (32) into a fourth current (33) and supplying the fourth current to the second robot part.

15. A method according to claim 12 to 14, wherein the method further comprises: providing the cavity in the airgap.

16. Use of a process media transfer unit according to any of the claims 1 to 11, or a method according to claim 12 to 15 for providing fluid media and power supply to a tool carried by an industrial robot.

17. An industrial robot containing a first robot part (1) and a second robot part (2), **characterized in that** the industrial robot comprises a process media transfer unit according to any of the claims 1 to 11.

## Patentansprüche

1. Eine Prozessmedienübertragungseinheit für einen industriellen Roboter, umfassend einen ersten Teil (18) zum Anbringen an einen ersten Roboterteil (1), einen zweiten Teil (19) zum Anbringen an einen zweiten Roboterteil (2), und einen Luftspalt (17), wobei der erste und der zweite Teil koaxial um einen gemeinsame Achse (29) angeordnet sind und von dem Luftspalt (17) getrennt werden, um eine endlose Rotation relativ zueinander bereitzustellen, wobei der erste Teil (18) einen ersten Kanal (22, 22a) umfasst, der in Fluidverbindung mit einer Kavität (13, 25) steht, und der zweite Teil (19) einen zweiten Kanal (23, 23a) umfasst, der in Fluidverbindung mit der Kavität steht, **dadurch** einen Mediendurchlass zwischen den Teilen bildend, wobei der erste Teil (18) einen ersten elektrischen Schaltkreis (35) umfasst, der eine erste Luftspule (20) beinhaltet, wobei der zweite Teil (19) einen zweiten elektrischen Schaltkreis (36) umfasst, der eine zweite Luftspule (21) beinhaltet, wobei der Luftspalt zwischen der ersten Luftspule und der zweiten Luftspule gebildet ist, und wobei die Prozessmedienübertragungseinheit einen magnetischen Schaltkreis (6) für die Interaktion mit dem ersten und dem zweiten elektrischen Schaltkreis über den Luftspalt umfasst, wobei der erste elektrische Schaltkreis eingerichtet ist, einen elektrischen Strom zu empfangen, um einen magnetischen Fluss in dem magnetischen Schaltkreis zu erzeugen, und der zweite elektrische Schaltkreis eingerichtet ist, den magnetischen Fluss des magnetischen Schaltkreises zu empfangen und einen elektrischen Strom zu dem zweiten Roboterteil zu liefern.

2. Eine Prozessmedienübertragungseinheit nach Anspruch 1, wobei der Luftspalt (17) eine zirkuläre zylindrische Form umfasst.

3. Eine Prozessmedienübertragungseinheit nach einem der Ansprüche 1 oder 2, wobei der Luftspalt (17) einen Teil umfasst, der in einer radialen Ebene zu der gemeinsamen Achse (29) angeordnet ist.

4. Eine Prozessmedienübertragungseinheit nach einem der vorangehenden Ansprüche, wobei die Medienübertragungseinheit eine Lagerungsanordnung (27) in dem Luftspalt umfasst, um den ersten Teil (18) selbsttragend zu machen.

5. Eine Prozessmedienübertragungseinheit nach einem der vorangehenden Ansprüche, wobei der Luftspalt (17) die Kavität (25) umfasst, die durch elastische zirkuläre Bänder (24) abgedichtet ist.

6. Eine Prozessmedienübertragungseinheit nach Anspruch 5, wobei die Kavität (25) die erste Spule (20) und die zweite Spule (21) enthält.

7. Eine Prozessmedienübertragungseinheit nach einem der vorangehenden Ansprüche, wobei der erste Teil (18) einen zusätzlichen dritten Kanal (22b) umfasst, der in Fluidverbindung mit einer zweiten Kavität (28) steht, und der zweite Teil (19) einen zusätzlichen dritten Kanal (23b) umfasst, der in Fluidverbindung mit der zweiten Kavität (28) steht.

8. Eine Prozessmedienübertragungseinheit nach einem der vorangehenden Ansprüche, wobei der erste elektrische Schaltkreis (35) einen ersten elektrischen Wandler (5) umfasst zum Empfangen eines ersten Gleichstroms (30) und zum Liefern eines zweiten Hochfrequenzwechselstroms (31) an die erste Spule (20).

9. Eine Prozessmedienübertragungseinheit nach einem der vorangehenden Ansprüche, wobei der zweite elektrische Schaltkreis (36) einen zweiten elektrischen Wandler (7) umfasst zum Empfangen eines dritten Hochfrequenzwechselstroms (32) von der zweiten Spule (21) und zum Liefern eines vierten Gleichstroms (33) an den zweiten Roboterteil.

10. Eine Prozessmedienübertragungseinheit nach Anspruch 9, wobei der zweite Wandler (7) Batteriemittel zur ununterbrochenen Energieversorgung umfasst.

11. Eine Prozessmedienübertragungseinheit nach einem der vorangehenden Ansprüche, wobei der zweite Teil (19) eine zentrale Öffnung (34) zum Aufnehmen des zweiten Roboterteils (2) umfasst.

12. Eine Verfahren zum Übertragen von elektrischer Energie zwischen einem ersten Teil (18) einer Prozessmedienübertragungseinheit, der an einen ersten Roboterteil (1) angebracht ist, und einem zweiten Teil (19) einer Prozessmedienübertragungseinheit, der an einem zweiten Roboterteil (2) angebracht ist, und der von dem ersten Teil durch einen Luftspalt (17) getrennt ist, wobei das Verfahren umfasst: Liefern eines zweiten Hochfrequenzwechselstroms (31) von dem ersten Roboterteil, Liefern des zweiten Hochfrequenzwechselstroms an eine erste Luftspule (20) in dem ersten Teil, Bilden eines magnetischen Flusses (6) in dem Luftspalt durch die erste Luftspule, Empfangen des magnetischen Flusses durch eine zweite Luftspule (21) in dem zweiten Teil, Transformieren des magnetischen Flusses in einen dritten Hochfrequenzwechselstrom (32) durch die zweite Luftspule zur elektrischen Energieversorgung an den zweiten Roboterteil, und weiterhin umfassend Bereitstellen eines ersten Kanals, der in Fluidverbindung mit der Kavität steht, in dem ersten Teil, Bereitstellen eines zweiten Kanals, der in Fluidverbindung mit der Kavität steht, in dem zweiten Teil und Übertragen eines Fluidmediums zwischen dem ersten Roboterteil und dem zweiten Roboterteil durch die Kanäle und die Kavität.

13. Ein Verfahren nach Anspruch 12, wobei das Liefern des zweiten Hochfrequenzwechselstroms weiterhin umfasst: Liefern eines ersten Stroms (30) an einen ersten Wandler (5) in dem ersten Teil, und Wandeln des ersten Stroms in den zweiten Hochfrequenzwechselstrom (31).

14. Ein Verfahren nach Anspruch 12 oder 13, wobei die elektrische Energieversorgung für den zweiten Roboterteil umfasst: Wandeln des dritten Hochfrequenzwechselstroms (32) in einen vierten Strom (33) durch einen zweiten elektrischen Wandler (7) in dem zweiten Teil, und Liefern des vierten Stroms an den zweiten Roboterteil.

15. Ein Verfahren nach einem der Ansprüche 12 bis 14, wobei das Verfahren weiterhin umfasst: Bereitstellen der Kavität in dem Luftspalt.

16. Verwendung einer Prozessmedienübertragungseinheit nach einem der Ansprüche 1 bis 11 oder eines Verfahrens nach Anspruch 12 bis 15 zum Bereitstellen von Fluidmedien und der Energieversorgung an ein Werkzeug, das von einem industriellen Roboter getragen wird.

17. Ein industrieller Roboter, der einen ersten Roboterteil (1) und einen zweiten Roboterteil (2) enthält, **dadurch gekennzeichnet, dass** der industrielle Roboter eine Prozessmedienübertragungseinheit nach einem der Ansprüche 1 bis 11 umfasst.

## Revendications

1. Unité de transfert d'agents de traitement pour un robot industriel comprenant une première partie (18) pour fixation à une première partie de robot (1), une seconde partie (19) pour fixation à une seconde partie de robot (2), et un entrefer (17), les première et seconde parties étant agencées coaxialement autour d'un axe commun (29) et séparé par l'entrefer (17) pour permettre une rotation sans fin de l'une par rapport à l'autre, dans laquelle la première partie (18) comprend un premier canal (22, 22a) en communication fluide avec une cavité (13, 25), et la seconde partie (19) comprend un second canal (23, 23a) en communication fluide avec la cavité, formant ainsi un passage d'agent entre les parties, dans laquelle la première partie (18) comprend un premier circuit électrique (35) incluant une première bobine à air (20), dans laquelle la seconde partie (19) comprend un second circuit électrique (36) incluant une seconde bobine à air (21), dans laquelle l'entrefer est formé entre la première bobine à air et la seconde bobine à air, et dans laquelle l'unité de transfert d'agents de traitement comprend un circuit magnétique (6) pour interaction avec les premier et second circuits électriques de part et d'autre de l'entrefer, moyennant quoi le premier circuit électrique est agencé pour recevoir un courant électrique pour générer un flux magnétique dans le circuit magnétique et le second circuit électrique est agencé pour recevoir le flux magnétique du circuit magnétique et fournir un courant électrique à la seconde partie de robot.

2. Unité de transfert d'agents de traitement selon la revendication 1, dans laquelle l'entrefer (17) comprend une forme cylindrique circulaire.

3. Unité de transfert d'agents de traitement selon la revendication 1 ou 2, dans laquelle l'entrefer (17) comprend une partie agencée dans un plan radial à l'axe commun (29).

4. Unité de transfert d'agents de traitement selon l'une quelconque des revendications précédentes, dans laquelle l'unité de transfert d'agent comprend un agencement de palier (27) dans l'entrefer pour rendre la première partie (18) auto-supportée.

5. Unité de transfert d'agents de traitement selon l'une quelconque des revendications précédentes, dans laquelle l'entrefer (17) comprend la cavité (25) fermée hermétiquement par des bandes circulaires élastiques (24)

6. Unité de transfert d'agents de traitement selon la revendication 5, dans laquelle la cavité (25) contient la première bobine (20) et la seconde bobine (21).

7. Unité de transfert d'agents de traitement selon l'une quelconque des revendications précédentes, dans laquelle la première partie (18) comprend un troisième canal supplémentaire (22b) en communication fluide avec une seconde cavité (28), et la seconde partie (19) comprend un troisième canal supplémentaire (23b) en communication fluide avec la seconde cavité (28).

8. Unité de transfert d'agents de traitement selon l'une quelconque des revendications précédentes, dans laquelle le premier circuit électrique (35) comprend un premier convertisseur électrique (5) pour recevoir un premier courant continu (30) et fournir un second courant alternatif haute fréquence (31) à la première bobine (20).

9. Unité de transfert d'agents de traitement selon l'une quelconque des revendications précédentes, dans laquelle le second circuit électrique (36) comprend un second convertisseur électrique (7) pour recevoir un troisième courant alternatif haute fréquence (32) de la seconde bobine (21) et fournir un quatrième courant continu (33) à la seconde partie de robot.

10. Unité de transfert d'agents de traitement selon la revendication 9, dans laquelle le second convertisseur (7) comprend des moyens de batterie pour une alimentation en courant ininterrompue.

11. Unité de transfert d'agents de traitement selon l'une quelconque des revendications précédentes, dans laquelle le seconde partie (19) comprend une ouverture centrale (34) pour recevoir la seconde partie de robot (2).

12. Procédé de transfert de courant électrique entre une première partie (18) d'une unité de transfert d'agents de traitement fixée sur une première partie de robot (1) et une seconde partie (19) d'une unité de transfert d'agents de traitement fixée sur une seconde partie de robot (2) et séparée de la première partie par un entrefer (17), le procédé comprenant : d'alimenter depuis la première partie de robot un second courant alternatif haute fréquence (31), d'alimenter le second courant alternatif haute fréquence (31) vers une première bobine à air (20) dans la première partie, de former par l'intermédiaire de la première bobine à air un flux magnétique (6) dans l'entrefer, de recevoir par l'intermédiaire d'une seconde bobine à air (21) dans la seconde partie le flux magnétique, de transformer par l'intermédiaire de la seconde bobine à air le flux magnétique en un troisième courant alternatif haute fréquence (32) pour alimenter en courant électrique la seconde partie de robot, et comprenant en outre de placer dans la première partie un premier canal en communication fluide avec la cavité, de placer dans la seconde partie un second canal en communication fluide avec la cavité, et de transférer un agent fluide entre la première partie de robot et la seconde partie de robot à travers lesdits canaux et la cavité.

13. Procédé selon la revendication 12, dans lequel l'alimentation du second courant alternatif haute fréquence comprend en outre : de fournir un premier courant (30) à un premier convertisseur (55) dans la première partie, et de convertir le premier courant en le second courant alternatif haute fréquence (31).

14. Procédé selon la revendication 12 ou 13, dans lequel l'alimentation de l'énergie électrique vers la seconde partie de robot comprend : de convertir par un second convertisseur électrique (7) dans la seconde partie le troisième courant alternatif haute fréquence (32) en un quatrième courant (33) et d'alimenter le quatrième courant vers la seconde partie de robot.

15. Procédé selon les revendications 12 à 14, dans lequel le procédé comprend en outre de placer la cavité dans l'entrefer.

16. Utilisation d'une unité de transfert d'agents de traitement selon l'une quelconque des revendications 1 à 11, ou d'un procédé selon les revendications 12 à 15 pour fournir une alimentation en agent fluide et en énergie à un outil supporté par un robot industriel.

17. Robot industriel contenant une première partie de robot (1) et une seconde partie de robot (2), **caractérisé en ce que** le robot industriel comprend une unité de transfert d'agents de traitement selon l'une quelconque des revendications 1 à 1l.
